# EUROPÄISCHE PATENTSCHRIFT

(11) **EP 1 394 084 B1**
(45) Veröffentlichungstag und Bekanntmachung des Hinweises auf die Patenterteilung: **07.12.2005**
(21) Anmeldenummer: 03090280.3
(22) Anmeldetag: 01.09.2003
(51) Int. Cl.: B65G 53/42, B65G 69/08, B65G 67/60

(54) **Lager für Schüttgut, Entnahmevorrichtung sowie Verfahren zur Entnahme von Schüttgut**
Bulk material silo, unloading apparatus and method for unloading bulk material
Silo pour matériau en vrac, appareil de déchargement et procédé pour décharger des produits en vrac

(30) Priorität: 30.08.2002 DE 10240753
(43) Veröffentlichungstag der Anmeldung: 03.03.2004
(73) Patentinhaber: Schellinger, Helmut, 88250 Weingarten (DE)
(72) Erfinder: Schellinger, Helmut, 88250 Weingarten (DE)
(74) Vertreter: Eisele, Otten, Roth & Dobler

(56) Entgegenhaltungen:
- DE-A- 10 051 400
- DE-B- 1 124 875
- US-A- 3 863 808

## Beschreibung

Die Erfindung betrifft ein Lager für Schüttgut nach dem Oberbegriff des Anspruchs 1 sowie eine Vorrichtung und ein Verfahren für die Entnahme von Schüttgut nach dem Oberbegriff des Anspruchs 5 bzw. 12.

### Stand der Technik:

Verfahren und Vorrichtungen zur Entnahme von Schüttgut aus Lagerräumen oder Behältern sind in den vielfältigsten Ausführungsformen bereits bekannt geworden.

Im Zusammenhang mit der Beheizung von Gebäuden erlangt in zunehmendem Maße das Schüttgut "Holzpellets" an Bedeutung. Holzpellets werden vermehrt als alternativer Brennstoff eingesetzt. Holzpellets bestehen aus in zylindrische Stäbchen gepressten Brennstoffen, insbesondere Holzspänen. Die Stäbchen haben üblicherweise einen Durchmesser von ca. 6 mm bei einer Länge von 5 bis 50 mm. Diese Form ermöglicht den automatischen Transport aus einem geeigneten Lagerraum zur Verbrennungseinrichtung, z.B. einem Heizkessel. Als Lagerraum kann ein Lagerbunker oder ein Silo dienen, in dem die Pellets bevorratet werden. Zweckmäßigerweise befindet sich der Lagerraum in Gebäuden im Keller neben dem Heizraum. Bei der Lagerung sollte für ein größtmögliches Lagervolumen vorzugsweise der gesamte vorhandene Raum genutzt werden.

Bei der normalerweise üblichen Entnahmeart von Pellets werden am Boden eines Lagers in einem geeigneten Trog oder Trichter die Pellets gesammelt und an der tiefsten Stelle entnommen. Anschließend werden die Pellets mechanisch oder pneumatisch einem Heizkessel zugeführt.

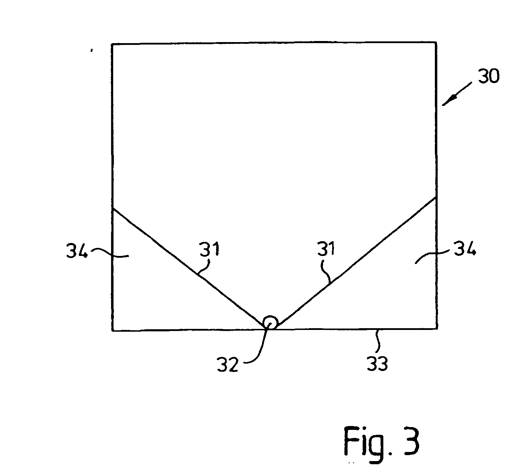

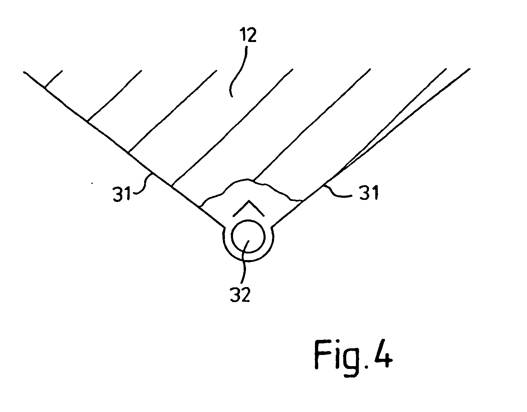

Der Entnahmevorgang findet normalerweise in zwei Schritten statt. Zunächst werden die Pellets mit einer Raumentnahmeschnecke (siehe hierzu auch Figuren 3 und 4) am tiefsten Punkt des Trog oder Trichters entnommen und zu einem Übergabepunkt außerhalb des Pelletslagers gefördert, was bei einer Punktentnahme entfällt. Von hier aus findet der Transport über eine weitere Schnecke (mechanisch) oder über ein pneumatisches Fördersystem statt.

Die soeben beschriebene Art der Entnahme hat verschiedene Nachteile. Zunächst findet durch den Trichter bzw. Schrägen im Boden des Pelletlagers eine Beschränkung des Lagervolumens statt. Bei Linienentnahme geht bis zu 30 % des Raumvolumens als Totraum unter den Schrägen verloren. Bei Punktentnahme, d.h. bei Einsatz eines Trichters beträgt der Verlust bis zu 50 %. Werden zur Vergrößerung des Lagervolumens die Schrägen weniger steil ausgeführt, besteht das Problem, dass sich das Lager nicht vollständig entleert (siehe hierzu insbesondere Figur 4). Bei der Verwendung von Bunkerschrägen anstatt einem Trichter müssen diese dem Druck mehrerer Tonnen Pellets standhalten und dementsprechend stabil ausgeführt sein, was normalerweise entsprechende Kosten verursacht. Die Linienentnahme bei einem Lagerbunker mit Bunkerschrägen ist zudem bei Einsatz einer Raumentnahmeschnecke aufwändig und damit teuer. Zusätzlich findet durch diese Art der Entnahme eine Entmischung der Pellets statt. Denn bei der Entnahme von unten bewegen sich zwangsläufig die darüber liegenden Pellets. Dabei entsteht ein sogenannter Kernfluss, der eine Entmischung von Grob- und Feinfraktionen der inhomogenen Pellets verursacht. Schließlich kann bei der Entnahme über eine Linienschnecke eine Brückenbildung über der Entnahmeschnecke stattfinden, die den Entnahmevorgang zum Erliegen bringen kann.

### Aufgabe und Vorteile der Erfindung:

Der Erfindung liegt die Aufgabe zugrunde, die Entnahme von Schüttgut aus Lagerräumen mit insbesondere vergleichsweise großer Grundfläche effizienter zu gestalten.

Diese Aufgabe wird durch die Merkmale des Anspruchs 1 und 12 gelöst.

In den Unteransprüchen sind zweckmäßige Weiterbildungen der Erfindung genannt.

Zunächst geht die Erfindung von einem Lager für Schüttgut, insbesondere Holzpellets aus, das einen im Wesentlichen abgeschlossenen Lagerraum umfasst, in dem eine Entnahmevorrichtung zum Entnehmen des Schüttguts angeordnet ist, wobei die Entnahmevorrichtung eine bewegbare wenigstens abschnittsweise flexible Rohranordnung mit einem Entnahmekopf umfasst. Der Kern der Erfindung liegt nun darin, dass innerhalb des Lagerraums angeordnete Verfahrmittel vorgesehen sind, durch welche der Entnahmekopf in die Lage versetzt ist, selbsttätig zumindest einen Großteil der Grundfläche des Lagerraums durch eine Bewegung mit veränderbarer Kurvenform und/oder eine lineare Bewegung abzuwandern. Mit Abwandern einer Grundfläche soll auch der Fall umfasst sein, dass auf einem Schüttguthaufwerk über der Grundfläche die Bewegung stattfindet. Dieser Vorgehensweise liegt zunächst die Erkenntnis zugrunde, dass es für eine homogene Entnahme von insbesondere Pellets aus einem Lagerraum bevorzugt ist, diese Pellets nicht von unten aus dem Lagerbunker, sondern von oben zu entnehmen, um eine Entmischung der Pellets mit entsprechend eingangs erwähnten Nachteilen beim Entnahmevorgang zu vermeiden. Zusätzlich wird hierdurch eine Brückenbildung über einem unteren Entnahmepunkt sicher verhindert und eine restlose Entleerung des Lagers ermöglicht. Dazu wandert der Entnahmekopf durch die Verfahrmittel auf der Grundfläche selber oder die Schüttgutoberfläche über vorzugsweise den kompletten Lagerraum.

Aus der deutschen Offenlegungsschrift DE 100 51 400 A1 ist ein Verfahren und eine Vorrichtung zum Entleeren von Schüttgut aus flexiblen, insbesondere sack- oder beutelartigen Behältnissen bekannt, die auch bei nicht bzw. schwer rieselfähigen Schüttgütern ein Absaugen aus den bekannten oben offenen flexiblen Behältnissen nach oben ohne manuelle Unterstützung ermöglichen. Dies erfolgt mittels einer Absaugvorrichtung, wobei die Absaugvorrichtung von oben her in das Behältnis eingeführt wird, ein Hebezeug, umfassend einen ringförmigen oder mehreckigen Halterahmen, an dem Halteelemente befestigt sind, die mit dem oberen Randbereich des Behältnisses in Halteeingriff gebracht werden, das Hebezeug mittels einer Hubeinrichtung in vertikaler Richtung bewegt wird, um das Behältnis zu strecken. Zum Leeren des Behältnisses wird die Absaugvorrichtung auf die Oberfläche des Schüttguts aufgelegt, ein Einsinken der Absaugvorrichtung in das Schüttgut aufgrund des Absaugens von Schüttgut durch die Absaugvorrichtung wird hingenommen. Dann wird die Absaugvorrichtung über das Schüttgut angehoben, wobei diese Schritte automatisch und mehrfach hintereinander durchgeführt werden. Bei dieser Art der Entnahme von Schüttgut über ein Förderrohr kann sich der Kopf auf keiner veränderbaren Kurvenform, und auch nicht linear über eine Grundfläche mit einem überwiegendem Bewegungsanteil parallel zur Grundfläche des Behältnisses bewegen, wodurch sich diese Art der Entnahme nur für Lagerbehälter mit vergleichsweise kleiner Grundfläche bei gleichbleibender Dimensionierung der Absaugvorrichtung eignet.

Die deutsche Auslegeschrift DE-A-1 124 875 betrifft eine Vorrichtung zum pneumatischen Löschen von Schüttgut mit einem an einem Rahmen befestigten Saugmundstück, einer drehbar gelagerten Schneidvorrichtung, welche aus zwei beidseits des Mundstücks angebrachten Förderschnecken besteht, die die Ladung lockern und dem Saugmundstück zuführten, und einem Motor zum Antreiben der Schneidvorrichtung. Die Förderschnecken sind längs zweier einander gegenüberliegenden Seiten eines Rechtecks mit dem Saugmundstück als Zentrum angeordnete. Die Förderschnecken sind je beiderseits der Mitte ihrer Wellen mit gegenläufigem Gewinde versehen und in entgegengesetzter Drehrichtung betrieben. Dadurch neutralisieren sich die Förderbewegungen der Schnecke, so dass eine Eigenbewegung gerade vermieden wird.

Um eine vergleichsweise große Grundfläche eines Lagerraums mit Entnahmekopf erreichen zu können, wird überdies vorgeschlagen, dass die Verfahrmittel dazu ausgelegt sind, den Entnahmekopf automatisch über eine Grundfläche zu bewegen, die in wenigstens einer Richtung um ein Vielfaches größer ist, als der Wirkungsbereich des Entnahmekopfs an einer Stelle im Schüttgut. Beispielsweise sind die Verfahrmittel in der Lage, den Entnahmekopf in zumindest einer Richtung um einen Wert zu bewegen, der mindestens 5x größer ist als dessen Wirkungsbereich an einer Stelle im Schüttgut.

In einer einfachen und kostengünstigen Lösung wird im Weiteren vorgeschlagen, dass die Förderrohranordnung mit Entnahmekopf zur pneumatischen Förderung von Schüttgut ausgelegt ist. In diesem Zusammenhang ist es vorteilhaft, wenn die Förderohranordnung ein Zuluft- und Absaugrohr, insbesondere einen Absaugschlauch, der bis in den Bereich des Entnahmekopfs geführt ist, umfasst. Mit einem Schlauch, über den pneumatisch Schüttgut entnommen wird, lassen sich durch dessen Beweglichkeit von einer Stelle, an welcher der Schlauch den Lagerraum verlässt, mühelos alle Stellen auf oder über einer vergleichsweise großen Grundfläche eines Lagerraums erreichen.

Im Weiteren wird eine Entnahmevorrichtung für ein Lager nach einem der vorhergehenden Ansprüche mit einer bewegbaren, wenigstens abschnittsweise flexiblen Förderrohranordnung, mit einem Entnahmekopf und Verfahrmittel zum Bewegen des Entnahmekopfs vorgeschlagen, bei welcher die Verfahrmittel dazu ausgelegt sind, den Entnahmekopf auf einer Grundfläche des Lagerraums zufällig zu bewegen. Das heißt, die Verfahrmittel sind so ausgeführt, dass der Entnahmekopf einen "Random Walk" durchführen kann. Durch diese Maßnahme kann der Entnahmekopf ohne größere Steuer- oder Regeleinrichtungen alle Punkte auf oder über einer Grundfläche eines Lagerraums erreichen. Die Verfahrmittel können dabei so ausgeführt werden, dass sich der Entnahmekopf mit zufällig ändernder Richtung so lange bewegt, bis er auf Schüttgut, z.B. Pellets trifft. Für den Fall, dass keine Pellets im Lagerraum mehr vorhanden sind, kann die Bewegung des Entnahmekopfs z.B. nach Ablauf einer gewissen Zeitspanne eingestellt werden, da dann davon auszugehen ist, dass der Lagerraum tatsächlich leer ist.

In einer überdies bevorzugten Ausführungsform der Erfindung besteht eine seitliche und/oder obere Begrenzung des Lagers aus flexiblem Material. Vorzugsweise sind die seitlichen Wände und/oder die obere Begrenzung des Lagers vollständig aus flexiblem Material hergestellt. Das erlaubt eine schnelle Installation eines solchen Lagers in bereits bestehenden Räumen, wobei mehrere derartige Lager nebeneinander angeordnet werden können. Vorteilhafterweise handelt es sich bei dem flexiblen Material um staubdichtes, aber luftdurchlässiges Material. Hierdurch wird vermieden, dass staubförmige Anteile des Lagerinhalts insbesondere beim Befüllen nach außen gelangen. Durch die Luftdurchlässigkeit wird gewährleistet, dass das Lager Druckunterschiede des Luftdrucks innen zu außen, ausgleichen kann. Z. B. kann beim Befüllen eingeblasene Förderluft gefiltert das Lager verlassen.

Die Erfindung betrifft außerdem eine Entnahmevorrichtung für ein Lager mit einer bewegbaren wenigstens abschnittsweise flexiblen Förderrohranordnung mit einem Entnahmekopf , bei welchem im Entnahmekopf ein Antrieb integriert ist, der einen Fahr- und/oder Bewegungsantrieb, insbesondere auf der Unterseite des Entnahmekopfs, umfasst. Dadurch kann auf weitere aufwändigere Führungsmittel für die Förderrohranordnung verzichtet werden. Gegebenenfalls hängt die Förderrohranordnung mit dem Entnahmekopf nur an einem flexiblen Zugmittel, um den Entnahmekopf im Lagerraum anheben und grob vorpositionieren zu können. Durch diese Vorgehensweise lässt sich insbesondere auch der oben beschriebene "Random Walk" vergleichsweise einfach realisieren.

Vorteilhafterweise weist der Antrieb ein an der Unterseite des Entnahmekopfs angeordnetes Drehelement auf. Das Drehelement kann in Bezug auf den Schwerpunkt des Entnahmekopfs außermittig angeordnet sein, was eine zufällige Bewegung des Entnahmekopfs begünstigt. Zum Beispiel besitzt das Drehelement an einer Drehwelle angeordnete Arme an der Unterseite des Entnahmekopfs, die sich im Betrieb auf einem Lagerraumboden bzw. an einem Haufwerk abstützen. Bei einer Drehbewegung der Welle mit Armen bewegt sich der Entnahmekopf durch die rotierenden Arme in einer Art Taumelbewegung auf der entsprechenden Oberfläche. Auf einem Lagerraumboden kann sich dabei ein solcher Antrieb besser fortbewegen, als auf einem Haufwerk, weshalb der Entnahmekopf dazu tendiert, sich vergleichsweise schneller über eine leere Fläche zu bewegen, so dass der Entnahmekopf sich automatisch an den Rändern eines Haufwerks, falls vorhanden, platziert. In einer günstigen Ausführungsform sind an einer Drehwelle zwei zumindest ungefähr gegenüberliegende Arme vorhanden. Die Armenden können für eine bessere Interaktion mit einer Oberfläche gummiert sein. Um die Aufnahmewirkung von Schüttgut zu verbessern, können die Arme auch mit einer Propelleranordnung kombiniert sein.

Beispielsweise umfasst der Fahrantrieb in einer bevorzugten Ausgestaltung ein Kugelelement, insbesondere eine Gummikugel, die auf der Unterseite des Entnahmekopfs angetrieben angeordnet ist. Um hierdurch den Entnahmekopf zufällig über die Grundfläche des Lagerraums, beispielsweise auf der Oberfläche eines Haufwerks bewegen zu können, ist die Gummikugel vorzugsweise um eine aus der horizontalen oder vertikalen bei horizontal ausgerichteter Auflagefläche des Entnahmekopfs abweichenden Achse drehbar am Entnahmekopf gelagert. Die Neigung der Achse beträgt beispielsweise 10° aus der Horizontalen oder Vertikalen. Hierdurch lässt sich ebenfalls ein "Random Walk" des Entnahmekopfs realisieren.

Es ist jedoch auch denkbar einen Bewegungsantrieb mit Elementen die sich in Bezug zueinander bewegen, z. B. in der Art von Gliedmaßen, insbesondere in einer Spinnenbeinanordnung oder in einer Form, die eine Raupenbewegung ermöglicht, zu realisieren.

Die Erfindung betrifft überdies eine Entnahmevorrichtung für ein Lager mit einer bewegbaren wenigstens abschnittsweise flexiblen Förderrohranordnung mit einem Entnahmekopf und Verfahrmittel zum Bewegen des Entnahmekopfs, bei welcher die Fördermittel eine Aufhängung mit flexiblen Zugmitteln, die an der Oberseite des Lagerraum angeordnet sind, umfassen. Über die flexiblen Zugmittel lässt sich die Förderrohranordnung mit Entnahmekopf, z.B. durch Verfahren des Aufhängepunkts der Zugsmittel an der Oberseite des Lagerraums, über oder auf der Grundfläche des Lagerraums bewegen. Die Förderrohranordnung kann beispielsweise über ein Zugseil, dessen Befestigungspunkt an der Decke des Lagerraums verschiebbar angebracht ist, über der Grundfläche eines Haufwerks oder das Haufwerk selbst geschleppt werden. Dies bietet sich insbesondere bei langgestreckten Lagern, d.h. Lagern mit einer langgestreckten Grundfläche an.

In einer weiteren besonders bevorzugten Ausgestaltung der Erfindung ist der Entnahmekopf mit einem Rühr- und oder Dosierwerk ausgestattet. Damit kann das Schüttgut, z.B. Pellets einer Saugöffnung zugeschaufelt werden, wodurch sich das Förderverhältnis, beispielsweise das Verhältnis der Förderluft zu Pellets genau einstellen lässt. Ein solches Dosier- und/oder Rührwerk ist vorzugsweise so ausgelegt, dass falsch proportioniertes Schüttgut, z.B. überlange Pellets, die die Förderleitung verstopfen könnten, auf eine geeignete Größe gebrochen werden. Mit dem Dosier- und/oder Rührwerk lässt sich auch eine möglicherweise auftretende Leitungsverstopfung verhindern, in dem das Rühr- und/oder Dosierwerk zeitverzögert zur z.B. Förderluft in der Förderrohranordnung eingeschaltet wird.

Im Weiteren ist es bevorzugt, wenn der Entnahmekopf hammerartig mit länglicher Ausgestaltung an der Förderrohranordnung ausgebildet ist. Hierdurch lässt sich z.B. beim Schleppen des Entnahmekopfes über einem Haufwerk eine größere Breite erfassen, als durch einen Entnahmekopf, der im Wesentlichen nur punktuell das Schüttgut aufnimmt. Der Fahrantrieb wird hierbei vorzugsweise mit horizontaler Achse eines auf den Untergrund wirkenden Bewegungselement ausgestaltet. Vorstellbar ist ein ein- oder mehrachsiger Antrieb, insbesondere in der Art wie bei einem Mondfahrzeug oder auch ein spinnenartiger Bewegungsmechanismus.

Bei einem Verfahren zur Entnahme von Schüttgut aus einem Lagerraum mit einer Entnahmevorrichtung, die eine bewegbare, wenigstens abschnittsweise flexible Förderrohranordnung mit einem Entnahmekopf umfasst, liegt der wesentliche Aspekt der Erfindung darin, dass innerhalb des Lagerraums verfahrmittel angeordnet sind, durch welche der Entnahmekopf selbsttätig über wenigstens einen Teil der Grundfläche des Lagerraums bewegbar ist, dass der Lagerraum mit darin befindlicher Förderrohranordnung befüllt wird, wobei sich vorzugsweise der Entnahmekopf am Boden des Lagerraumes befindet, und der Entnahmekopf dementsprechend mit Schüttgut überdeckt wird, dass mit dem mit Schüttgut überdeckten Entnahmekopf so lange Schüttgut entnommen wird, bis sich ein Schüttguttrichter am Entnahmekopf bildet und kein Schüttgut mehr nachfließt, und das dann die Eigenbewegung des Entnahmekopfs entlang der Oberfläche des Lagerraumbodens und/oder der Oberfläche des Schüttguthaufwerks zur weiteren Entnahme von Schüttgut beginnt.

### Zeichnungen:

Mehrere Ausführungsbeispiele der Erfindung sind in den Zeichnungen unter Angabe weiterer Einzelheiten und Vorteile erläutert. Es zeigen:
- Fig. 1: einen Lagerraum mit sich selbständig bewegbarer Entnahmesonde in einer teilweise geschnittenen schematischen Seitenansicht,
- Fig. 2a: den vorderen Teil einer Entnahmesonde auf einem Haufwerk aus Pellets platziert in einer schematischen, teilweise geschnittenen Seitenansicht,
- Fig. 2b und 2c: einen Entnahmekopf in einer Ansicht von unten sowie in einer Teilansicht von der Seite,
- Fig. 2d: eine weitere Ausführungsform eines Entnahmekopf in einer Ansicht von unten,
- Fig. 3: einen Schnitt durch einen herkömmlichen Lagerraum mit Entnahmeschnecke in stark schematisierter Darstellung und
- Fig. 4: der untere Teil eines Lagerbunkers mit Bunkerschrägen und Entnahmeschnecke in einer schematisierten Schnittansicht.

### Beschreibung der Ausführungsbeispiele:

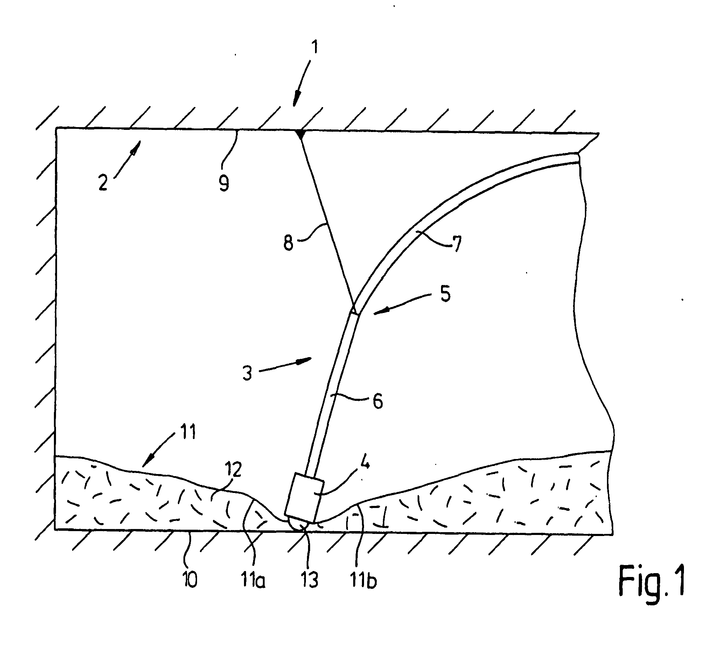

In Fig. 1 ist in einer teilweise geschnittenen schematisierten Seitenansicht ein Lager 1 dargestellt, dass einen Lagerraum 2 umfasst, in welchem eine Entnahmesonde 3 angeordnet ist.

Die Entnahmesonde 3 besitzt einen Entnahmekopf 4, der am vorderen Ende einer Saugleitung 5 angebracht ist. Die Saugleitung 5 weist einen starren Leitungsabschnitt 6 im vorderen Bereich bis zum Entnahmekopf 4 auf, der an einen flexiblen Saugschlauch anschließt. Die Saugleitung 5 weist für eine grobe Positionierung ein Zugseil 8 auf, das an einer Decke 9 des Lagerraums 2 festgelegt ist. Anstatt eines festgelegten Zugseils 8 können auch andere Formen einer flexiblen Aufhängung zur Anwendung kommen, z.B. ein Zugseil, dessen Befestigungspunkt an der Decke des Lagerraums bewegbar ist, ein aus- und einrollbares Zugseil oder eine andere Form einer flexiblen Aufhängung, die z.B. bewegliche Arme umfasst.

Im Lagerraum 2 befindet sich auf dem Boden 10 ein Haufwerk 11 mit Schüttgut, hier Pellets 12.

Auf der Unterseite des Entnahmekopfs 4, ist eine angetriebene Kugel 13 vorgesehen, mit welcher sich der Entnahmekopf 4 mit anschließender Saugleitung am Boden 10 des Lagerraums 2 selbstständig fortbewegen kann bis steiler werdende Flanken 11a, 11b des Haufwerks 11 eine Bewegung des Entnahmekopfs unterbinden, solange, bis an der jeweiligen Stelle über den Entnahmekopf so viele Pellets 12 entnommen wurden, dass sich der Entnahmekopf über die angetriebene Kugel 13 selbsttätig bis zur nächsten Anhäufung von Pellets 12 weiterbewegt.

Über die flexible Aufhängung der Saugleitung 5 ist der Entnahmekopf 4 mit integrierter Antriebskugel 13 in der Lage, selbsttätig sich bis an Seitenbegrenzungen des Lagerraums 2 zu bewegen, um dort verbleibende Pellets aufzusaugen. Letztlich lässt sich durch diese Vorgehensweise eine vollständige Entleerung des Lagerraums 2 erreichen.

Mit Hilfe der Antriebskugel 13 kann sich der Entnahmekopf 4 nicht nur auf dem Boden 10 des Lagerraums 2 fortbewegen, sondern bis zu einem gewissen Grad auch auf dem Haufwerk selber.

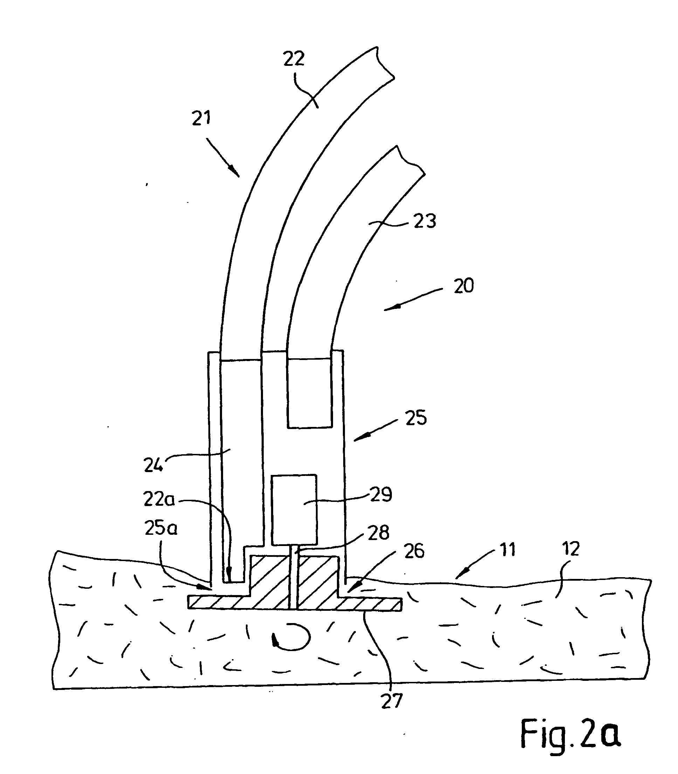

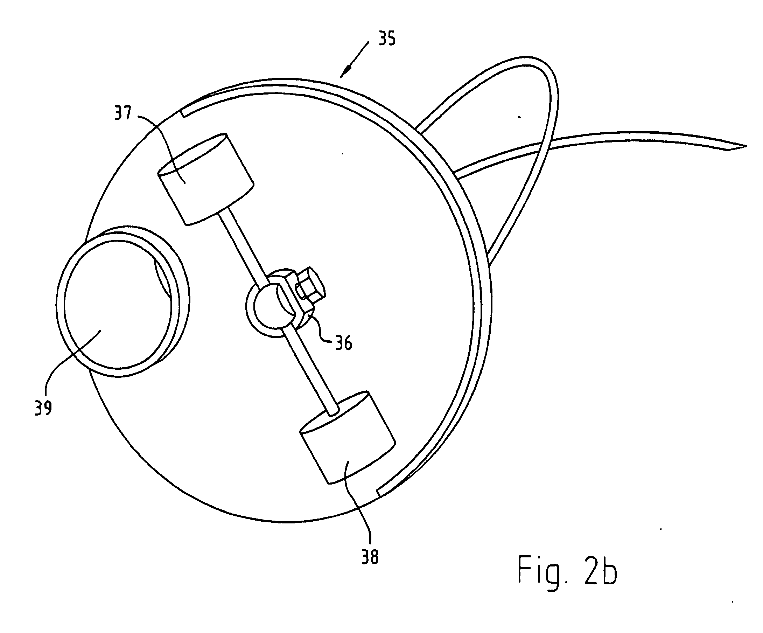

In Fig. 2a ist der vordere Teil einer weiteren Entnahmesonde 20 in einer teilweise geschnittenen Seitenansicht dargestellt. Diese Entnahmesonde 20 besitzt eine Förderrohranordnung 21, die einen Saugschlauch 22 und einen Rückluftschlauch 23 umfasst.

Der Saugschlauch 22 weist ein starres vorderes Ende 24 auf, das bis in den vorderen Bereich eines Entnahmekopfes 25 geführt ist. Am vorderen, normalerweise zum Haufwerk zeigenden Ende des Entnahmekopfes 5 ist ein Dosier- und Bewegungsorgan 26 angebracht. Das Dosier- und Bewegungsorgan 26 besteht aus einem drehbaren gelagerten Scheibenelement 27, das durch eine Welle 28 eines Motors 29 in eine Drehbewegung versetzt werden kann.

Das Scheibenelement 27 hat mehrere Aufgaben:
Zunächst findet hierdurch eine Bewegung des Entnahmekopfes 5 mit Förderrohranordnung 21 auf einem Boden eines Lagerraumes oder hier auf der Oberfläche eines Haufwerks 11 aus Pellets 12 statt. Um bei einem lediglich rotierenden Scheibenelement einen gezielt linearen Bewegungsanteil zu erreichen, ist die Antriebswelle 28 vorzugsweise um einen kleinen Winkel, z.B. 10° aus einer Vertikalen, bezogen auf die unteren Scheibenebene, geneigt angebracht. Dadurch führt der Entnahmekopf eine "zufällige" Schlingerbewegung durch, mit deren Hilfe der Entnahmekopf jede Stelle eines Untergrunds erreichen kann.

Darüber hinaus hat das Scheibenelement die Aufgabe, in eine Öffnung 25a des Entnahmekopfs 25 hier Pellets zu dosieren, die dann über den Saugschlauch 22 abgesaugt werden. Das Scheibenelement 27 begrenzt dabei nicht nur die Öffnungsgröße, sondern sorgt bei der Drehung für eine Verschiebebewegung der Pellets in der Öffnung 25a. Dadurch wird vermieden, dass die Öffnung 25a oder eine Öffnung 22a des Saugschlauchs verstopft wird. Gegebenenfalls werden übergroße Pellets durch einen Mahleffekt zerkleinert.

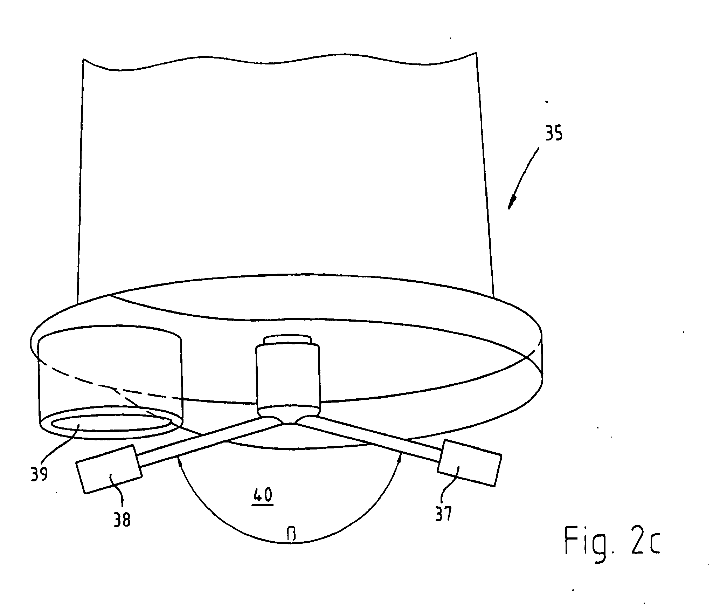

In den Figuren 2b und 2c ist ein Entnahmekopf 35 dargestellt, der auf der Unterseite eine von einem Motor angetriebene Welle aufweist, an der an zwei gegenüberliegenden Stellen Arme 37, 38 angeordnet sind. Auf der Unterseite des Entnahmekopfs 35 ist überdies eine Einsaugöffnung 39 platziert. Im Betrieb liegen die Arme 38, 37 auf der Oberfläche 40 eines Lagerraums bzw. eines Haufwerks auf. Durch eine Drehbewegung der Welle rotieren entsprechend die Arme, wodurch sich eine Taumelbewegung des Entnahmekopfs 35 einstellt, der sich damit auf der Oberfläche in zufällige Richtungen bewegt. Dadurch trifft der Entnahmekopf automatisch immer auf zu entnehmendes Haufwerk, solange solches im Lagerraum vorhanden ist. Die Arme können in vielfältiger Form ausgestaltet sein und z.B. von der Seite betrachtet einen stumpfen Winkel β einschließen, so dass gezielt die vorderen Bereiche der Arme 37, 38 mit der Umgebung in Interaktion treten. Die vorderen Bereiche der Arme 37, 38 sind vorzugsweise etwas verbreitert, um eine günstige Auflage zu bilden. Diese Bereiche können auch gummiert sein.

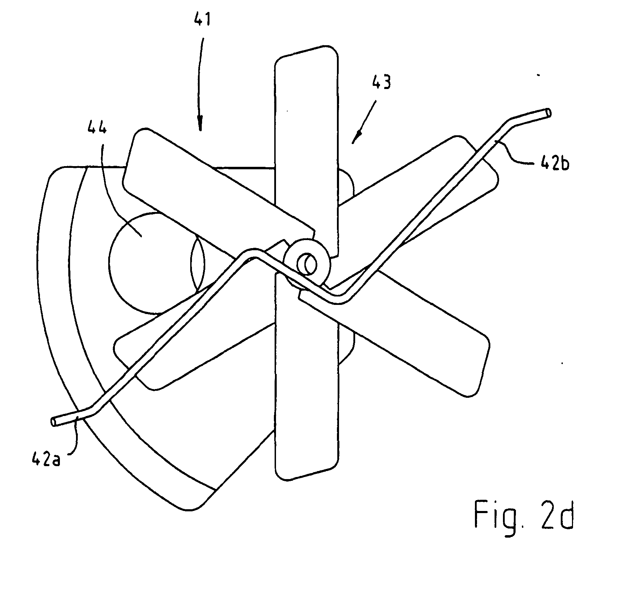

In Figur 2d ist eine Ausführungsform eines Entnahmekopfs 41 abgebildet, die dem Prinzip nach der Ausführungsform gemäß der Figuren 2b und 2c arbeitet. Die Form der Arme 42a, 42b ist etwas anders, wie beim Entnahmekopf 35, und zusätzlich sitzt in Einsaugrichtung hinter den Armen 42a und 42b eine Propelleranordnung 43, die eine verbesserte Aufnahme von z.B. Pellets sowie eine kontrollierte Förderung in Bezug auf eine Einsaugöffnung 44 begünstigt. Die Arme 42a und 42b bestehen aus einem durchgehend gebogenen Rundmaterial, das an den vorderen Bereichen der Arme 42a, 42b vom Entnahmekopf 41 jeweils weggebogen ist.

In Fig. 3 ist einem stark schematisierten Schnittbild ein Lager 30 mit schrägen Bunkerwänden 31 zu einer Entnahmeschnecke 32 dargestellt. Bei dieser aus dem Stand der Technik bekannten Ausführungsform wird deutlich, dass unterhalb der schrägen Bunkerwände 31 bei vorausgesetzt ebenen Boden 33 des Lagerraums ein beträchtlicher Totraum 34 hinzunehmen ist.

Je flacher die Bunkerwände 31 des Lagers 30 ausgeführt sind, desto größer ist die Gefahr, dass sich das Schüttgut 12 über die Entnahmeschnecke 32 nicht vollständig entnehmen lässt, da es nicht im ausreichenden Maße zur Entnahmeschnecke nachrutscht.

Im schlimmsten Fall bildet sich aus Schüttgut, z.B. Pellets 12 über der Entnahmeschnecke eine Brücke aus ineinander verkeilten Pellets 12, so dass eine Entnahme vollständig blockiert ist. In einem solchen Fall ist es insbesondere bei Pellets-Lagern für die Beheizung erforderlich, manuell solche Brückenanordnungen aufzulösen, damit eine Entnahme über die Entnahmeschnecke wieder möglich ist. Dies ist dann z.B. verbunden mit einem Ausfall der Heizung oder der Warmwasseraufbereitung. Darüber hinaus ist das "Wiederflottmachen" der Entnahme zeit- und kostenintensiv.

## Patentansprüche

1. Lager (1) für Schüttgut, insbesondere Holzpellets (12), mit einem im Wesentlichen abgeschlossenen Lagerraum (2), in dem eine Entnahmevorrichtung (20) zum Entnehmen des Schüttguts angeordnet ist, wobei die Entnahmevorrichtung (20) eine bewegbare, wenigstens abschnittsweise flexible Förderrohranordnung (5, 21) mit einem Entnahmekopf (4, 25) umfasst, **dadurch gekennzeichnet, dass** innerhalb des Lagerraums (2) angeordnete Verfahrmittel (13, 26) vorgesehen sind, durch welche der Entnahmekopf (4, 25) in die Lage versetzt ist, selbsttätig zumindest einen Großteil der Grundfläche (10) des Lagerraums (2) durch eine Bewegung mit veränderbarer Kurvenform und/oder eine lineare Bewegung abzuwandern.

2. Lager nach Anspruch 1, **dadurch gekennzeichnet, dass** die Verfahrmittel (13, 26) dazu ausgelegt sind, den Entnahmekopf (4, 25) über eine Grundfläche (10) zu bewegen, die in wenigstens einer Richtung um ein Vielfaches größer ist als der Wirkungsbereich des Entnahmekopfs (4, 25) an einer Stelle im Schüttgut (12).

3. Lager nach Anspruch 1 oder 2, **dadurch gekennzeichnet, dass** die Förderrohranordnung (5, 21) mit Entnahmekopf (25) zur pneumatischen Förderung von Schüttgut (12) ausgelegt ist.

4. Lager nach einem der vorhergehenden Ansprüche, **dadurch gekennzeichnet, dass** die Förderrohranordnung (21) ein Zuluft-und Absaugrohr (22, 23) umfasst.

5. Lager nach einem der vorhergehenden Ansprüche, **dadurch gekennzeichnet, dass** eine seitliche und/oder obere Begrenzung des Lagers aus flexiblem Material vorgesehen ist.

6. Entnahmevorrichtung für ein Lager nach einem der vorhergehenden Ansprüche mit einer bewegbaren, wenigstens abschnittsweise flexiblen Förderrohranordnung (5, 21) mit einem Entnahmekopf (4, 25), **dadurch gekennzeichnet, dass** im Entnahmekopf (4, 25) ein Antrieb (29, 26, 13) integriert ist, der einen Fahrantrieb und/oder Bewegungsantrieb umfasst.

7. Entnahmevorrichtung für ein Lager nach einem der Ansprüche 1-5 mit einer bewegbaren, wenigstens abschnittsweise flexiblen Förderrohranordnung (5, 21), mit einem Entnahmekopf (4, 25) und Verfahrmittel (13, 26) zum Bewegen des Entnahmekopfs (4, 25) nach Anspruch 6, **dadurch gekennzeichnet, dass** die Verfahrneittel (13, 26) dazu ausgelegt sind, den Entnahmekopf (4, 25) auf und/oder über einer Grundfläche des Lagerraums (2) zufällig zu bewegen.

8. Entnahmevorrichtung für ein Lager nach einem der Ansprüche 1-5 mit einer bewegbaren, wenigstens abschnittsweise flexiblen Förderrohranordnung (5, 21), mit einem Entnahmekopf (4, 25) und Verfahrmittel zum Bewegen des Entnahmekopfs (4, 25), nach einem der Ansprüche 6 oder 7, **dadurch gekennzeichnet, dass** die Verfahrmittel eine Aufhängung mit flexiblen Zugmitteln (8), die an der Oberseite (9) des Lagerraums (2) angeordnet sind, umfassen.

9. Entnahmevorrichtung für ein Lager nach einem der Ansprüche 6 bis 8, **dadurch gekennzeichnet, dass** der Entnahmekopf (4, 25) mit einem Rühr- und/oder Dosierwerk (26) ausgestattet ist.

10. Entnahmevorrichtung nach einem der Ansprüche 6 bis 9, **dadurch gekennzeichnet, dass** der Entnahmekopf hammerartig an der Förderrohranordnung ausgebildet ist.

11. Verfahren zur Entnahme von Schüttgut (12) aus einem Lagerraum (2) mit einer Entnahmevorrichtung (3, 20), die eine bewegbare, wenigstens abschnittsweise flexible Förderrohranordnung (5, 21) mit einem Entnahmekopf (4, 25) umfasst, **dadurch gekennzeichnet, dass** innerhalb des Lagerraums (2) Verfahrmittel (13, 26) angeordnet sind, durch welche der Entnahmekopf selbsttätig über wenigstens einen Teil der Grundfläche (10) des Lagerraums (2) bewegt werden kann, dass der Lagerraum (2) mit darin sich befindender Förderrohranordnung (5, 21) befüllt wird, wobei der Entnahmekopf (4, 25) mit Schüttgut (12) überdeckt wird, dass mit dem mit Schüttgut (12) überdeckten Entnahmekopf (4, 25) solange Schüttgut (12) entnommen wird, bis sich ein Schüttguttrichter um den Entnahmekopf (4, 25) bildet und kein Schüttgut mehr nachfließt, und dass dann eine Eigenbewegung des Entnahmekopfs (4, 25) entlang der Oberfläche des Lagerraumbodens (10) und/oder Schüttguthaufwerks (11) zur weiteren Entnahme von Schüttgut (12) beginnt.

## Claims

1. Store (1) for bulk material, in particular wood pellets (12), with an essentially sealed storage chamber (2), in which an unloading apparatus (20) is arranged for unloading the bulk material, whereby the unloading apparatus (20) comprises a mobile conveyor tube arrangement (5, 21) that is at least partly flexible with an unloading head (4, 25), **characterised in that** traversing means (13, 26) arranged inside the storage chamber (2) are provided by means of which the unloading head (4, 25) is moved into position to move over automatically at least a large proportion of the base surface (10) of the storage chamber (2) in a movement with changeable curve shape and/or linear movement.

2. Store according to claim 1, **characterised in that** the traversing means (13, 26) are designed to move the unloading head (4, 25) across a base surface (10) which is many times greater in at least one direction than the range of effectiveness of the unloading head (4, 25) at one point in the bulk material (12).

3. Store according to claim 1 or 2, **characterised in that** the conveyor tube arrangement (5, 21) with unloading head (25) is designed for the pneumatic conveyance of bulk material (12).

4. Store according to one of the preceding claims, **characterised in that** the conveyor tube arrangement (21) comprises a feed air and waste air suction tube (22, 23).

5. Store according to one of the preceding claims, **characterised in that** the store is defined on the sides and/or top by flexible material.

6. Unloading apparatus for a store according to one of the preceding claims with a mobile, conveyor tube arrangement (5, 21) that is at least partly flexible with an unloading head (4, 25), **characterised in that** a drive (29, 26, 13) is integrated into the unloading head (4, 25) which comprises a travelling drive and/or motion drive.

7. Unloading apparatus for a store according to one of claims 1 -5 with a mobile conveyor tube arrangement (5,21) that is at least partly flexible with an unloading head (4, 25) and traversing means (13, 26) for moving the unloading head (4, 25) according to claim 6, **characterised in that** the traversing means (13, 26) are designed to move the unloading head (4, 25) randomly on and/or over a base surface of the storage chamber (2).

8. Unloading apparatus for a store according to one of claims 1-5 with a mobile conveyor tube arrangement (5, 21) that is at least partly flexible with an unloading head (4, 25) and traversing means for moving the unloading head (4, 25) according to one of claims 6 or 7, **characterised in that** the traversing means comprise a suspension with flexible traction means (8) which are arranged on the upper side (9) of the storage chamber (2).

9. Unloading apparatus for a store according to one of claims 6 to 8, **characterised in that** the unloading head (4, 25) is equipped with an agitator and/or metering device (26).

10. Unloading apparatus according to one of claims 6 to 9, **characterised in that** the unloading head is designed like a hammer on the conveyor tube arrangement.

11. Method for unloading bulk material (12) from a storage chamber (2) with an unloading apparatus (3, 20) which comprises a conveyor tube arrangement (5, 21) that is at least partly flexible with an unloading head (4, 25), **characterised in that** inside the storage chamber (2) traversing means (13, 26) are arranged, by means of which the unloading head can be moved automatically over at least a portion of the base surface (10) of the storage chamber (2), **in that** the storage chamber (2) is filled with the conveyor tube arrangement (5, 21) located therein, whereby the unloading head (4, 25) is covered over with bulk material (12), **in that** with the unloading head (4, 25) covered over with bulk material (12) bulk material (12) is removed until a bulk material funnel forms around the unloading head (4, 25) and there is no more afterflow of bulk material, and **in that** then a separate movement of the unloading head (4, 25) begins along the surface of the storage chamber base (10) and/or bulk material debris (11) for the further removal of bulk material (12).

## Revendications

1. Silo (1) pour produit en vrac, en particulier des granulés de bois (12), comprenant un espace de stockage sensiblement fermé (2), dans lequel est agencé un dispositif de prélèvement (20) pour prélever le produit en vrac, le dispositif de prélèvement (20) comprenant un agencement tubulaire de transport mobile, flexible au moins par segments (5, 21) avec une tête de prélèvement (4, 25),
**caractérisé en ce que** sont prévus des moyens de déplacement (13, 26), agencés à l'intérieur de l'espace de stockage (2) et grâce auxquels la tête de prélèvement (4, 25) est amenée en position pour balayer automatiquement au moins une grande partie de la surface de base (10) de l'espace de stockage (2) par un mouvement en forme de courbe variable et/ou un mouvement linéaire.

2. Silo selon la revendication 1,
**caractérisé en ce que** les moyens de déplacement (13, 26) sont conçus pour déplacer la tête de prélèvement (4, 25) sur une surface de base (10) qui, dans au moins une direction, est plusieurs fois supérieure à la zone d'action de la tête de prélèvement (4, 25) à un emplacement dans le produit en vrac (12).

3. Silo selon la revendication 1 ou 2,
**caractérisé en ce que** l'agencement tubulaire de transport (5, 21) avec tête de prélèvement (25) est conçu pour le transport pneumatique de produit en vrac (12).

4. Silo selon l'une des revendications précédentes,
**caractérisé en ce que** l'agencement tubulaire de transport (21) comprend un tuyau d'arrivée d'air et un tuyau d'aspiration (22, 23).

5. Silo selon l'une des revendications précédentes,
**caractérisé en ce qu'**il est prévu une limitation latérale et/ou supérieure du silo dans un matériau flexible.

6. Dispositif de prélèvement pour un silo selon l'une des revendications précédentes comprenant un agencement tubulaire de transport mobile, flexible au moins par segments (5, 21) avec une tête de prélèvement (4, 25),
**caractérisé en ce qu'**un entraînement (29, 26, 13) est intégré dans la tête de prélèvement (4, 25), lequel comprend un entraînement de translation et/ou entraînement de mouvement.

7. Dispositif de prélèvement pour un silo selon l'une des revendications 1 à 5 comprenant un agencement tubulaire de transport mobile, flexible au moins par segments (5, 21), avec une tête de prélèvement (4, 25) et des moyens de déplacement (13, 26) pour déplacer la tête de prélèvement (4, 25) selon la revendication 6,
**caractérisé en ce que** les moyens de déplacement (13, 26) sont conçus pour déplacer au hasard la tête de prélèvement (4, 25) sur et/ou au-dessus d'une surface de base de l'espace de stockage (2).

8. Dispositif de prélèvement pour un silo selon l'une des revendications 1 à 5 comprenant un agencement tubulaire de transport mobile, flexible au moins par segments (5, 21), avec une tête de prélèvement (4, 25) et des moyens de déplacement pour déplacer la tête de prélèvement (4, 25) selon l'une des revendications 6 ou 7,
**caractérisé en ce que** les moyens de déplacement comprennent une suspension avec des moyens de traction flexibles (8) qui sont agencés sur la face supérieure (9) de l'espace de stockage (2).

9. Dispositif de prélèvement pour un silo selon l'une des revendications 6 à 8,
**caractérisé en ce que** la tête de prélèvement (4, 25) est pourvue d'un mécanisme de mélange et/ ou de dosage (26).

10. Dispositif de prélèvement selon l'une des revendications 6 à 9,
**caractérisé en ce que** la tête de prélèvement est conçue en forme de marteau sur l'agencement tubulaire de transport.

11. Procédé pour prélever du produit en vrac (12) d'un espace de stockage (2) comprenant un dispositif de prélèvement (3, 20) qui comprend un agencement tubulaire de transport mobile, flexible au moins par segments (5, 21) avec une tête de prélèvement (4, 25),
**caractérisé en ce que** des moyens de déplacement (13, 26) sont agencés à l'intérieur de l'espace de stockage (2), grâce auxquels la tête de prélèvement peut être déplacée automatiquement sur au moins une partie de la surface de base (10) de l'espace de stockage (2), **en ce que** l'espace de stockage (2) contenant l'agencement tubulaire de transport (5, 21) est rempli de façon que la tête de prélèvement (4, 25) est recouverte par du produit en vrac (12), **en ce que** du produit en vrac (12) est prélevé avec la tête de prélèvement (4, 25) recouverte de produit en vrac (12) jusqu'à ce qu'un entonnoir de produit en vrac se forme autour de la tête de prélèvement (4, 25) et qu'aucun produit en vrac ne s'écoule plus et **en ce que** commence ensuite un mouvement propre de la tête de prélèvement (4, 25) le long de la surface du plancher de l'espace de stockage (10) et/ou du tas de produit en vrac (11) pour poursuivre le prélèvement de produit en vrac (12).
